(19) **Europäisches Patentamt European Patent Office Office européen des brevets**

(11) **EP 0 877 057 B1**

(12) **EUROPEAN PATENT SPECIFICATION**

(45) Date of publication and mention
of the grant of the patent:
**02.05.2007 Bulletin 2007/18**

(51) Int Cl.:
*C08F 8/08* [(2006.01)]  *C08L 53/02* [(2006.01)]
*C08L 63/08* [(2006.01)]  *C08L 67/02* [(2006.01)]
*C08L 69/00* [(2006.01)]  *C08L 95/00* [(2006.01)]

(21) Application number: **98202416.8**

(22) Date of filing: **20.07.1994**

(54) **A POLYALKYLENE RESIN COMPOSITION CONTAINING AN EPOXY-MODIFIED BLOCK COPOLYMER**

POLYALKYLEN-HARZZUSAMMENSETZUNG DIE EIN EPOXYMODIFIZIERTES BLOCK-COPOLYMER ENTHÄLT

COMPOSITION DE RÈSINE DE POLYALKYLÈNE CONTENANT UN POLYMÈRE SÉQUENCÉ ÉPOXIDÉ

(84) Designated Contracting States:
**DE ES FR GB NL**

(30) Priority: **13.12.1993 JP 31168293**
**10.01.1994 JP 76694**
**10.01.1994 JP 76894**
**10.01.1994 JP 76994**
**10.01.1994 JP 77094**
**10.01.1994 JP 77294**
**24.01.1994 JP 563994**
**05.04.1994 JP 6718794**
**05.04.1994 JP 6718894**
**09.05.1994 JP 9490494**
**09.05.1994 JP 9490594**
**16.05.1994 JP 10040194**

(43) Date of publication of application:
**11.11.1998 Bulletin 1998/46**

(62) Document number(s) of the earlier application(s) in
accordance with Art. 76 EPC:
**94401666.6 / 0 658 603**

(73) Proprietor: **DAICEL CHEMICAL INDUSTRIES, LTD.**
**Sakai-shi, Osaka-fu 590 (JP)**

(72) Inventor: **Ohtsuka, Yoshihiro**
**Otake-shi,**
**Hiroshima-ken (JP)**

(74) Representative: **Portal, Gérard et al**
**Cabinet Beau de Loménie**
**158, rue de l'Université**
**75340 Paris Cédex 07 (FR)**

(56) References cited:
**EP-A- 0 149 192**  **EP-A- 0 498 426**
**EP-A- 0 516 203**  **EP-A- 0 564 050**
**US-A- 3 477 978**  **US-A- 4 017 436**
**US-A- 4 135 037**

• **PATENT ABSTRACTS OF JAPAN vol. 017, no. 135 (C-1037), 19 March 1993 (1993-03-19) & JP 04 309553 A (KANEGAFUCHI CHEM IND CO LTD), 2 November 1992 (1992-11-02)**
• **PATENT ABSTRACTS OF JAPAN vol. 015, no. 181 (C-0830), 9 May 1991 (1991-05-09) & JP 03 043446 A (JAPAN SYNTHETIC RUBBER CO LTD), 25 February 1991 (1991-02-25)**
• **PATENT ABSTRACTS OF JAPAN vol. 006, no. 057 (C-098), 14 April 1982 (1982-04-14) & JP 57 000120 A (HITACHI LTD), 5 January 1982 (1982-01-05)**

**Description**

FIELD OF THE INVENTION

The present invention relates to a polyalkylene terephthalate resin composition which comprises a polyalkylene terephthalate, a carboxylic acid and an epoxy-modified aromatic vinyl-conjugated diene block copolymer.

An article molded from the polyalkylene terephthalate resin composition exhibits only a slight loss in improved mechanical strength even after repeatedly molding.

BACKGROUND OF THE INVENTION

Numerous attempts to improve resins has been earnestly undertaken for many years by blending polymers having different properties.

In the blend of polymers, it is well known that various mechanical and physical properties in an article molded therefrom depend upon compatibility between blended polymers.

Many publications, for example, US Patents 4,011,285, 4,562,222, 4,564,655, 4,677,148, Japanese Patent Unexamined Publication Nos. 11486/1972 (DE 2159325-B), 75651/1975 (no-family), 100840/1981 (no-family), 174645/1984, 100809/1992 (various compatible blends using an aromatic-diene copolymer having epoxy groups at terminal) and WO 84/04104 (a compatible blend of a polycarbonate and a styrenic copolymer) reveal a method or compatibilizing agent in order to improve compatibility between blended polymers or in order to improve the impact strength of resin.

Styrene-based thermoplastic elastomers are used as a compatibilizing agent or impact modifier in publications.

For example, a styrene-butadiene-styrene block copolymer has been conventionally known as one of such styrene-based thermoplastic elastomers.

However, a problem arises in that the dispersion state, impact resistance, heat resistance and processability in a blend of resins cannot be sufficiently improved by conventional styrene-butadiene-styrene block copolymer.

Furthermore, polyalkylene terephthalate resin, typified by polyethylene terephthalate and polybutylene terephthalates has been used in parts for cars, electric or electronic apparatuses, etc., because of its excellent mechanical properties. However, polyalkylene terephthalate has poor impact strength.

Many publications, for example, Japanese Patent Unexamined Publication Nos. 144452/1976, 32045/1977, 117049/1978 reveal a method in order to improve impact strength in a polyalkylene terephthalate, in which a modified polyolefin, particularly an olefinic copolymer comprising a glycidyl ester alpha-olefine and an alpha/beta unsaturated carboxylic acid is used as an excellent impact modifier.

However, a problem arises in that long-awaited improved mechanical properties in an article molded from a polyalkylene terephalate resin composition having conventional modifiers are reduced after repeated molding.

It goes without saying that repeated molding is important from the viewpoint of efficient resource use, for example, inferior molded articles or molding wastes derived from a sprue, runner and gate in a molding die frequently used together with virgin polymers in molding.

In addition, aromatic polycarbonate resin has been widely used because of its excellent mechanical strength, : weatherability, light stability and heat resistance.

However, an article molded from aromatic polycarbonate resin generally has a glossy surface. Although a glossy surface is desirable depending upon the use, a frosted surface is rather desirable in a computer or typewriter keyboard or housing, housings for various electric apparatuses and certain parts for cars, and the like.

A frosted surface in an molded article can be obtained by embossing the surface or by the addition of inorganic fillers, such as finely powdered silica, silicates or alumina to resins to be molded.

However, frosting by embossing is an additional process, resulting in increased cost. Furthermore, a surface frosted by embossing frequently is worn away by abrasion, resulting in possible regeneration of a glossy surface.

Furthermore, the addition of inorganic fillers to resins may adversely affect physical and mechanical properties such as impact strength.

Even the use of polymer-based frosting agents also may adversely affect mechanical properties such as impact strength and important physical properties such as heat distortion temperatures, weatherability, and light stability.

Many publications, for example, Japanese Patent Unexamined Publication Nos. 193950/1984, 20955/1985, 174257/1986 and 156851/1988 reveal a method in order to improve a frosting property in aromatic polycarbonate without the use of inorganic fillers, mechanical properties, and heat resistance, in which butadiene-based rubbery polymers are used.

However, a problem arises in that their aromatic polycarbonate composition frequently exhibits insufficient weatherability in the use of butadiene-based rubbery polymers.

As described hereinabove, sufficient weatherability, mechanical properties, and frosting property can not be simultaneously improved in a conventional polycarbonate-based resin composition.

Further, it is known that epoxy resin is a compound having epoxy groups which is reactive and which is widely used in various industrial materials such as coatings and adhesives, and electric apparatuses fields.

Recently, mainly used on a large scale are so-called epi-bis or novolak epoxy resins produced by reacting bisphenol A with epichlorohydrin or by reacting novolak phenol with epichlorohydrin in the presence of alkali catalysts. Furthermore, cycloaliphatic epoxy resins have been also used in the field.

This is because of characteristics such as excellent mechanical and adhesive properties, surface smoothness, water resistance, electrical properties and curability.

A vinyl chloride-based resin composition has been widely used in the form of sheets or film because of excellent properties such as economical cost, excellent weatherability, moldability, and gas barrier properties.

However, a problem arises in that it readily causes thermal decomposition mainly due to dehydrochlorination in molding during heating, resulting in deteriorated mechanical properties and coloring, both of which are remarkable disadvantages.

In order to prevent the thermal decomposition of vinyl chloride-based resin composition, one or more heat stabilizers such as metal salts of organic acids or organic tin compounds, and the like, have been satisfactorily used in molding thereof.

However, thermal stabilizers such as metal salts, particularly cadmium and lead salts, are poisonous, resulting in limited application.

Instead of using cadmium or lead salts, a combined use of other metal salts or the use of organic heat stabilizers such as epoxy compounds, polyvalent alcohols, organic phosphorus compounds, organic sulfur compounds, phenol compounds, beta-diketone compounds, and the like are proposed. However, thermal stabilizers are not sufficient in stabilizing for a vinyl chloride-based resin composition.

A pressure-sensitive adhesive composition, particularly, a hot-melt pressure-sensitive adhesive composition, has attracted attention because of its remarkable economic advantages of being harmless, saving resources, and high productivity compared to solvent or emulsion adhesives.

Styrene-butadiene-styrene block copolymer, which is a thermoplastic elastomer composed of aromatic vinyl compounds and conjugated diene compounds, is being put to use as a component in a pressure-sensitive adhesive composition in the fields of pressure-sensitive adhesive tapes and labels.

Thermoplastic elastomer composed of aromatic vinyl compounds and conjugated diene compounds has a general configuration, for example, $(A-B)_a A$, $(B-A)_a$ and $(A-B)_{n+1} X$ (wherein, A is an aromatic vinyl compound polymer block, B is a conjugated diene compound polymer block X is the residual group of a coupling agent, and n is an integer of more than 1).

However, the pressure-sensitive adhesive composition having the thermoplastic elastomer does not have a good balance of pressure-sensitive adhesive properties and holding power.

Besides, many publications, for example, Japanese Patent Unexamined Publication No. 282235/1989 reveal an asphalt composition having a modifier which is an atactic polypropylene having a specified structure.

However, the asphalt composition has poor temperature and storage properties.

Japanese Patent Examined Publication Nos. 17319/1972 and 36949/1984 reveal an asphalt composition having a block copolymer in which monoalkenyl compound and conjugated diene are copolymerized.

However, the asphalt composition has high melt viscosity and poor storage stability and heat resistance.

From the above-described viewpoints, and as a result of studies by the present inventors, it has been found that various mechanical properties in an article molded from a compatible blend or thermoplastic resin composition, heat resistance in an article molded from polyalkylene terephthalate resin composition, surface frosting in an article molded from polycarbonate resin composition, tensile strength and adhesive properties in epoxy resin composition, heat stability in vinyl chloride-based resin composition, a pressure-sensitive properties in a pressure-sensitive adhesive composition, and flow, storage stability, and vibration damping properties in the asphalt composition can be improved by using epoxy-modified aromatic vinyl-conjugated diene block copolymer.

The object of the present invention is to provide a polyalkylene terephthalate composition having excellent mechanical properties even after repeated molding.

More precisely, the object relates to a polyalkylene terephthalate resin composition which comprises :

- 100 parts of a polyalkylene terephthalate resin (a),
- 0.001 to 10 parts of a carboxylic acid (b) and
- 1 to 100 parts of an epoxy-modified aromatic vinyl-conjugated diene block copolymer (c) in which a polymer block (i) consisting of an aromatic vinyl compound and a polymer block (ii) consisting of a compound having a conjugated double bond are included,

wherein remaining double bonds are partially or completely epoxidized.

According to a preferred embodiment, the invention relates to a polyalkylene terephthalate resin composition wherein said carboxylic acid (b) is at least one selected from the group consisting of benzoic acid, p-toluic acid and sebacic acid.

BRIEF DESCRIPTION OF THE DRAWING

Figure 1 is an FT-NMR absorption spectra chart related to epoxy-modified block copolymer obtained in Synthesis Example 1.
Figure 2 is an FT-NMR absorption spectra chart related to epoxy-modified block copolymer obtained in Synthesis Example 5.
Figure 3 is an FT-NMR absorption spectra chart related to epoxy-modified block copolymer obtained in Synthesis Example 7.

DETAILED DESCRIPTION OF THE INVENTION

The present invention is described hereinafter in more detail.

The present invention essentially include the component (c) epoxy-modified aromatic vinyl-conjugated diene block copolymer.

The component (c) epoxy-modified aromatic vinyl-conjugated diene block copolymer in the present invention is employed as an agent for preventing heat degradation in molding polyalkylene terephthalate resins.

The component (c) epoxy-modified aromatic vinyl-conjugated diene block copolymer includes (i) a polymer block consisting of an aromatic vinyl compound and (ii) a polymer block consisting of a compound having a conjugated double bond, wherein remaining double bonds are epoxidized, as an essential chemical structure.

In the component (c) epoxy-modified aromatic vinyl-conjugated diene block copolymer, the aromatic vinyl compound specifically includes, for example, styrene, alpha-methylstyrene, vinyl toluene, p-tert-butylstyrene, divinylbenzene, p-methyl styrene, 4-n-propyl styrene, 2,4-dimethylstyrene, 3,5-diethyl styrene, 1,1-diphenylstyrene, 2,4,6-trimethyl styrene, 4-cyclohexylstyrene, 3-methyl-5-n-hexyl styrene, and the like.

Although one or more of aromatic vinyl compounds may be used, styrene is frequently and preferably used.

In the component (c) epoxy-modified aromatic vinyl-conjugated diene block copolymer, the compound having a conjugated double bond specifically includes, for example, butadiene, isoprene, 1,3-peintadiene, 2,3-dimethyl-1,3-butadiene, piperylene, 3-butyl-1,3-octadiene, 1-phenyl-1,3-butadiene, 1,3-octadiene, 4-ethyl-1,3-hexadiene, and the like.

Although one or more of compounds having a conjugated double bond may be used, butadiene, isoprene, piperylene and mixtures thereof are frequently and preferably used.

The block copolymer in the present invention essentially includes a polymer block A consisting of aromatic vinyl compound and polymer block B consisting of the compound having a conjugated double bond.

The copolymerization ratio of the aromatic vinyl compound with respect to the compound having a conjugated double bond is generally 5/95 to 70/30, preferably 10/90 to 60/40.

The number average molecular weight of the block copolymer to be employed in the present invention is generally from 5,000 to 600,000, preferably 10,000 to 500,000, and the molecular weight distribution [the ratio (Mw/Mn) of a weight average molecular weight (Mw) to a number average molecular weight (Mn)] is less than 10.

The molecular structure of the block copolymer to be employed in the present invention may be any of linear, branched and radial types and any combination thereof.

The block copolymer consisting of the aromatic vinyl compound and compound having a conjugated double bond is represented by general configurations, for example, of $(A-B)_nA$, $(B-A)_n$ and $(A-B-)_4Si$, and the like.

Of them, the (A-B)nA type copolymer is generally employed.

Unsaturated bonds remaining in the block copolymer derived from a conjugated double bond may be partially hydrogenated.

Copolymerization of the above-mentioned aromatic vinyl compound and compound having a conjugated double bond is effected in a non polar solvent, specifically an aromatic hydrocarbon such as benzene, toluene, xylene, ethylbenzene and the like, and aliphatic hydrocarbon such as n-hexane, cyclohexane, and the like, in the presence of an organolithium initiator such as methyllithium, n-butyllithium, n-decyllithium, tert-butyllithium, phenyllithium, naphthyllithium, p-tolyllithium, cyclohexyllithium, cyclophenyllithium, and the like.

The amount of organolithium initiator can vary depending on the desired molecular weight of the final product, but generally would be the from 1 to 50 gram millimole based on 100 grams of monomers.

The block copolymer is prepared by a polymerization process employing sequential polymerization of the above-mentioned aromatic vinyl compound and compound having a conjugated double bond.

In sequential polymerization, non elastomeric blocks or segments are first formed by multiple additions of aromatic vinyl compound and organolithium initiator. Subsequently, the compound having a conjugated double bond is added and polymerized to form an elastomeric polymer block.

Polymerization may be carried out at approximately -20 °C to 150 °C, preferably 20 °C to 100 °C. Although the reaction period would depend upon polymerization conditions, it is generally within 48 hours, preferably up to 24 hours.

At the conclusion of polymerization, a poly-functional treatment agent is added to the unquenched reaction mixture.

The poly-functional treatment agent which is allowed to react must contain at least three reactive sites capable of reacting with the lithium-carbon bond in the polymer and thereby coupling the agent to the polymer at this bond. For this reason, compounds containing active hydrogen atoms such as water, alcohols, acids, and the like are to be avoided in polymerization since such compounds replace the lithium atom with hydrogen and do not effect the desired coupling.

Types of poly-functional treatment agents which can be employed include polyepoxides, polyisocyanates, polyimides, polyaldehydes, polyketones, polyanhydrides, polyesters, polyhalides, and the like.

Although any polyepoxides can be preferably employed, those which are liquid are especially preferred because they can be readily handled and form a relatively small nucleus for the polymer.

Preferred polyepoxides include epoxidized hydrocarbon polymer such as epoxidized liquid polybutadiene and epoxidized vegetable oils such as epoxidized soybean oil and epoxidized linseed oil, and the like.

The amount of poly-functional treatment agent to be employed is approximately 1.0 to 1.5 equivalents of poly-functional treatment agent based on the lithium present in the resulting copolymer.

After polymers have been allowed to react with the poly-functional treatment agent, they are recovered by treatment with a material containing active hydrogen such as an alcohol.

Copolymerization may be carried out by one-stage copolymerization.

In one-stage copolymerization, the block copolymer is formed by the difference in reaction velocities between the aromatic vinyl compound and compound having a conjugated double bond.

Block copolymer consisting of the aromatic vinyl compound and compound having a conjugated double bond, the preparation processes thereof, and the uses thereof are disclosed in detail, for example, in US Patents 3,265,765, 3,280,084, 3,281,383, 3,333,02, 3,432,323, 3,507,934, 3,607,977, 3,637,554, 3,639,517, 3,652,732, 3,792,005, 3,872,068, 3,993,613, 4,051,197, 4,080,407, 4,086,298, 4,584,346, 4,704,434, 4,879,34, 5,001,199, 5,039,755, 5,130,377, and 5,264,480, Japanese Examined Patent Publication Nos. 23798/1965, 17979/1968, 32415/1971 and 28925/1981, etc.

Epoxy-modified aromatic vinyl-conjugated diene block copolymer can be prepared by epoxidation of unsaturated bonds remaining derived from a conjugated double bond in the thus-obtained block copolymer.

The epoxidation can be carried out using an epoxidation agent such as peracids or hydroperoxides.

Peracids include performic acid, peracetic acid, perpropionic acid, perbenzoic acid, trifluoroperacetic acid, and the like. Of these peracids, peracetic acid is the preferred epoxidation agent, because it is available on an industrial basis at a moderate price and has a high stability.

Hydroperoxides include hydroperoxide, tertiarybutylhydroperoxide, cumenperoxide, metachloroperbenzoic acid, and the like.

In the epoxidation, a catalyst can be used as appropriate to the circumstances.

For example, in the case when peracetic acid is used as an epoxidation agent, an alkali such as sodium carbonate and an acid such as sulfuric acid can be used as a catalyst.

Furthermore, in the case of using hydroperoxides, it is possible to obtain a catalytic effect, for example, using a mixture of tungstic acid and sodium hydroxide with hydrogen peroxide, or hexacarbonylmolybudenum with tertiary butyl hydroperoxide.

The epoxidation is carried out in the absence or presence of a solvent, while controlling the reaction temperature according to the apparatus to be used and properties of raw materials.

The temperature region of the epoxidation can be selected based on the reactivity of the epoxidation agent.

In the case of peracetic acid, which is the preferable epoxidation agent, the preferred temperature is 0 to 70 °C.

If the temperature is under 0 °C, the reaction velocity is slow but, if the temperature exceeds 70 °C, peracetic acid can decompose.

In tertiary butylhydroperoxide/molybdenumdioxide diacetyl acetate, which is an example of a hydroperoxide, the preferable temperature is 20 °C to 150 °C, based on the same consideration.

The use of solvents for dilution is effective for lowering the reaction velocity of raw materials and stabilizing the epoxidation agent.

In the case when peracetic acid is used as the epoxidation agent, preferred solvents include aromatic compounds such as benzene, toluene, and xylene, a hydrocarbon such as hexane and cyclohexane, a halogenated compound such as carbontetrachloride and chloroform, and ester compounds such as ethyl acetate.

Of these solvents, ethyl acetate is especially preferred.

The molar ratio of the epoxidation agent to be used with respect to unsaturated bonds is selected based on the proportion of unsaturated bonds which it is desired to retain.

When preparing epoxy compositions having many epoxy groups, an equal or higher molar ratio of epoxidation agents to unsaturated bonds is preferably used, but using amounts of epoxidation agents at a molar ratio exceeding 10/1 with respect to unsaturated bonds is not preferable because of the cost and side reactions described hereinafter. With peracetic acid, a preferable molar ratio is 1/1 to 5/1.

The preferred epoxy equivalent in the epoxy-modified aromatic vinyl-conjugated diene block copolymer is 140 to 5,000, preferably 200 to 2700.

The epoxy-modified aromatic vinyl-conjugated diene block copolymer having epoxy equivalent of less than 140 cannot be substantially prepared in an industrial fashion, because aromatic vinyl-conjugated diene block copolymer which is a starting material generally has a content of diene moiety of 90 % by weight at most.

Even though the diene moiety is completely epoxidized, resultant epoxy groups are partially ring-opened, resulting in partially gelling and not attaining to values more than epoxy equivalent of 140.

On the other hand, in the case when the epoxy equivalent exceeds 5,000, compatibility with resin would become poor.

Epoxy-modified aromatic vinyl-conjugated diene block copolymer obtained can be separated from a crude reaction solution by appropriate procedures, for example, reprecipitation with a bad solvent, solvent removed by distillation after copolymer was poured into hot water while stirring, or by a direct solvent removal.

Epoxy-modified aromatic vinyl-conjugated diene block copolymer, preparation processes thereof, and uses thereof are disclosed in detail, for example, in US Patents 3,551,518, 3,555,112, 3,607,982, 3,699,184, 4,051,199, 4,131,725, 4,135,037, 4,341,672, 5,229,464, etc.

According to the present invention, there is provided a polyalkylene terephthalate resin composition which comprises (a) 100 parts of a polyalkylene terephthalate, (b) 0.01 to 10 parts of a carboxylic acid and (c) 1 to 100 parts of an epoxy-modified aromatic vinyl-conjugated diene block copolymer in which (i)a polymer block consisting of an aromatic compound and (ii)a polymer block consisting of a compound having a conjugated double bond are included, wherein remained double bonds are partially or completely epoxidized.

In the present invention which is a polyalkylene terephthalate resin composition, the component (c) an epoxy-modified aromatic vinyl-conjugated diene block copolymer is employed as a stabilizer for preventing heat degradation in molding together with the component (b) an organic acid.

That is, the polyalkylene terephthalate resin composition according to the present invention degrades mechanical properties only slightly even after repeatedly molding, whereas polyalkylene terephthalate resin alone significantly degraded mechanical properties.

Preferred examples of polyalkylene terephthalate resin specifically include polyethylene terephthalate, polybutylene terephthalate, polypropylene terephthalate, polyhexamethylene terephthalate and polycyclohexane dimethylene terephthalate, and the like.

Of them, polyethylene terephthalate and polybutylene terephthalate are more preferably employed because of their excellent mechanical properties.

The preferred polyalkylene terephthalate resin to be employed in the present invention has a relative viscosity of 1.2 to 2.0, more preferably 1.3 to 1.8.

In the case when the relative viscosity is less than 1.2, sufficient mechanical properties cannot be obtained in an article molded from the composition. In the case when the relative viscosity exceeds 2.0, however, an excellent surface gloss can not be obtained in an article molded from the composition.

It is noted that the relative viscosity is measured by 0.5 % o-chlorophenol solution at 25 °C.

The polyalkylene terephthalate resin composition of the present invention includes from 1 to 100 parts, more preferably from 3 to 50 parts by weight of the component (c) an epoxy-modified aromatic vinyl-conjugated diene block copolymer based on 100 parts by weight of polyalkylene terephthalate resin.

In the case when the amount is less than 1 part by weight, heat degradation cannot be sufficiently prevented in an article molded from the composition. On the other hand, in the case when the amount exceeds 100 parts by weight, an excellent surface gloss cannot be obtained in an article molded from the composition.

Preferred examples of the component (b)an organic acid specifically include a compound having at least one carboxylic group, for example, an aromatic carboxylic acid such as benzoic acid, toluic acid, naphtoic acid, anthrathene carboxylic acid, biphenyl carboxylic acid, terephthalic acid, isophthalic acid, ortho-phthalic acid, naphthalene dicarboxylic acid, biphenyl dicarboxylic acid, trimesic acid, trimellitic acid, and the like; an aliphatic carboxylic acid such as caprylic acid, laurylic acid, tridecylic acid, myristic acid, palmitic acid, stearic acid, nonadecanoic acid, adipic acid, azelaic acid, sebacic acid, dodecanoic dicarboxylic acid, tricarballylic acid, and the like; a cycloaliphatic carboxylic acid such as cyclohexane dicarboxylic acid, cyclopentane,dicarboxylic acid, an unsaturated carboxylic acid such as oleic acid, linoleic acid, tetrahydrophthalic acid and cinnamyl acid, and the like.

Of carboxylic acids, aromatic monocarboxylic acids, aliphatic monocarboxylic acids and aliphatic dicarboxylic acids having a long chain can be preferably employed. Carboxylic acids having a molecular weight of from 100 to 1000 are preferably employed.

One or more carboxylic acids may be employed.

The polyalkylene terephthalate resin composition preferably includes 0.001 to 10 parts, more preferably 0.005 to 5 parts by weight of carboxylic acids based on 100 parts by weight of polyalkylene terephthalate resin.

In the case when the amount is less than 0.001 parts by weight, heat degradation cannot be sufficiently prevented in an article molded from the composition. On the other hand, in the case when the amount exceeds 10 parts by weight, excellent mechanical properties cannot be obtained in an article molded from the composition.

Although the polyalkylene terephthalate resin composition of the present invention can be limitlessly prepared, for example, it can be preferably prepared by a method in which polyalkylene terephthalate resin, the component (b)an organic acid and the component (c)an epoxy-modified aromatic vinyl-conjugated diene block copolymer are pelletized after being melted and mixed with an extruder.

It is noted that a conventional additive can be mixed so long as the effect is not deteriorated in the polyalkylene terephthalate resin composition of the present invention.

Examples of the additive include fibrous or granular fillers, reinforcing materials, antioxidants, a conventional heat stabilizer(e.g., a hindered phenol, hydroquinone, thioether, phosphites, substituents thereof and a mixture thereof), an ultraviolet ray absorbent [e.g., resorcinol, salicylate, benztriazol, benzophenone, and the like], a lubricant, a mold release agent [e.g., stearates, montanic acid salts, esters, half esters, stearyl alcohol, ethylenebis(stearamide), and the like], a coloring agent such as dyes[e.g., nitrocin, and the like], pigments(e.g., cadmium sulfide, phthalociyanine and carbon black), a flame retardant(e.g., halides such as decabromodiphenylether and a carbonate bromide, melamines, cyanurates and phosphoruses), an auxiliary agent for a flame retardant [e.g., an antimony oxide], an anti-static agent [e.g., a sodium dodecylbenzene sulfonate and a polyalkyleneglycol, and the like] and a crystal nucleus agent, and the like.

Furthermore, a small amount of other thermoplastic or thermosetting resins and or soft thermoplastic resin can be optionally mixed.

Examples of thermoplastic resin specifically include polyethylene, polypropylene, acrylic resin, fluorocarbon resin and polyamide, polyacetal, polycarbonate, polysulfone and polyphenyleneoxide, and the like.

Examples of thermosetting resin specifically include phenol resin, melamine resin, unsaturated polyester resin, silicone resin and epoxy resin, and the like.

Examples of soft thermoplastic resin specifically include ethylenevinyl acetate copolymer, polyester elastomer and ethylene-propylene terpolymer, and the like. One or more of the resins can be mixed.

In the following, Synthetic Examples, Application Examples and Comparative Application Examples are described in order to specifically illustrate the present invention.

(Synthesis Example 1/Preparation of the component (c)an epoxy-modified aromatic vinyl-conjugated diene block copolymer)

A jacketed reaction vessel equipped with a stirrer, a reflux condenser and a thermometer was charged with 300 parts by weight of polystyrene-polybutadiene-polystyrene block copolymer (a trade name of TR2000 manufactured by Japan Synthetic Rubber, Ltd.) and 1500 parts by weight of ethyl acetate, followed by being dissolved.

Successively, 169 parts by weight of ethyl acetate solution having 30 % by weight of peracetic acid was continuously added dropwise, followed by epoxidizing while stirring at 40 °C for 3 hours. The reactant solution was cooled to ordinary temperatures, followed by being taken out of the reaction vessel.

Successively, large amounts of methanol were added to the solution to precipitate copolymer, then copolymer was filtered and washed by water, followed by being dried to obtain an epoxy-modified aromatic vinyl conjugated diene block copolymer having an epoxy equivalent of 470.

It is noted that the ratio of butadiene to styrene in TR2000 is 60/40. Epoxy-modified aromatic vinyl-conjugated diene block copolymer obtained was designated as copolymer A.

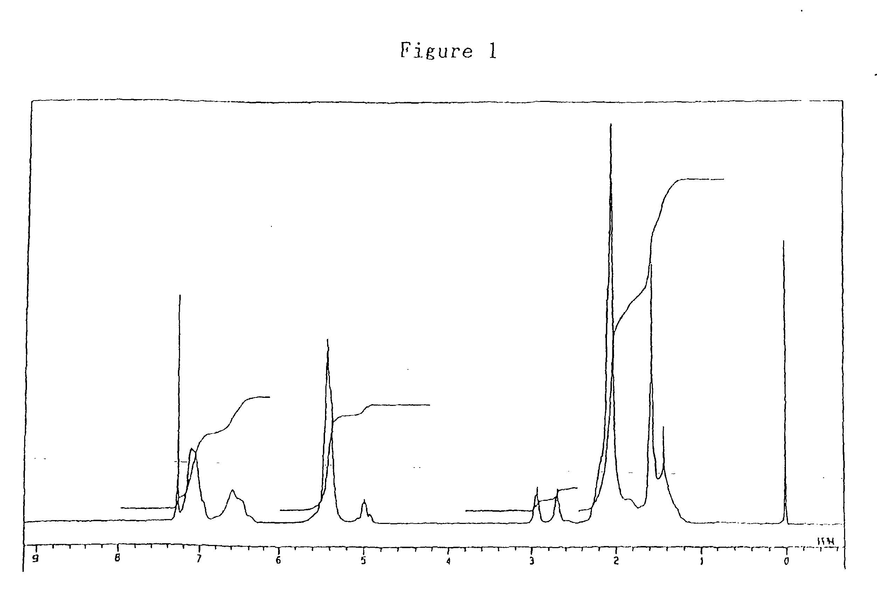

An FT-NMR absorption spectrum chart related to the epoxy-modified block copolymer obtained is shown in Figure 1.

It was confirmed by the Figure 1 that there decreased the peaks in 4.8-5.1 ppm and 5.2-5.6 ppm which depend upon a diene component after epoxidation, and then there were observed the peaks in 2.6-2.8 ppm and 2.8-3.0 ppm which depend upon epoxy groups derived from the epoxidation reaction.

(Synthesis Example 2/Preparation of the component (c)an epoxy-modified block copolymer)

A jacketed reaction vessel equipped with a stirrer, a reflux condenser and a thermometer was charged with 300 parts by weight of polystyrene-polybutadiene-polystyrene block copolymer (a trade name of TR2000 manufactured by Japan Synthetic Rubber,Ltd.) and 1500 parts by weight of ethyl acetate, followed by being dissolved.

Successively, 43 parts by weight of ethyl acetate solution having 30 % of peracetic acid was continuously added dropwise, followed by epoxidizing while stirring at 40 °C for 3 hours.

The reactant solution was cooled to ordinary temperatures, followed by being taken out of the reaction vessel.

Successively, large amounts of methanol were added to the solution to precipitate a copolymer, then copolymer was filtered and washed by water, followed by being dried to obtain an epoxy-modified copolymer having an epoxy equivalent of 1820.

Epoxy-modified aromatic vinyl-conjugated diene block copolymer obtained was designated as copolymer B.

(Synthesis Example 3/Preparation of the component (c)an epoxy-modified aromatic vinyl-conjugated diene block copolymer)

A jacketed reaction vessel equipped with a stirrer, a reflux condenser and a thermometer was charged with 300 parts by weight of polystyrene-polybutadiene-polystyrene block copolymer (a trade name of TR2400 manufactured by Japan Synthetic Rubber,Ltd.) and 1500 parts by weight of ethyl acetate, followed by being dissolved.

Successively, 113 parts by weight of ethyl acetate solution having 30 % by weight of peracetic acid was continuously added dropwise, followed by epoxidizing while stirring at 40 °C for 3 hours. The reactant solution was cooled to ordinary temperatures, followed by being taken out of the reaction vessel.

Successively, large amounts of methanol were added to the solution to precipitate a copolymer, and then the copolymer was filtered and washed by water, followed by being dried to obtain an epoxy-modified copolymer having an epoxy equivalent of 695. It is noted that the ratio of butadiene to styrene in TR2400 is 40/60.

The epoxy-modified aromatic vinyl-conjugated diene block copolymer obtained was designated as copolymer C.

(Synthesis Example 4/Preparation of the component (c)an epoxy-modified aromatic vinyl-conjugated diene block copolymer)

A jacketed reaction vessel equipped with a stirrer, a reflux condenser and a thermometer was charged with 300 parts by weight of polystyrene-polybutadiene-polystyrene block copolymer (a trade name of Kaliflex D1122 manufactured by Shell, Ltd.) and 1500 parts by weight of cyclohexane, followed by being dissolved.

Successively, 177 parts by weight of ethyl acetate solution having 30 % by weight of peracetic acid was continuously added dropwise, followed by epoxidizing while stirring at 40 °C for 3 hours. The reactant solution was cooled to ordinary temperatures, followed by being taken out of the reaction vessel.

**[0135]** - Successively, large amounts of methanol were added to the solution to precipitate a copolymer, and then the copolymer was filtered and washed by water, followed by being dried to obtain an epoxy-modified aromatic vinyl-conjugated diene block copolymer having an epoxy equivalent of 448.

Epoxy-modified copolymer obtained was designated as copolymer D. (Synthesis Example 5/Preparation of the component (c)an epoxy-modified aromatic vinyl-conjugated diene block copolymer)

A jacketed reaction vessel equipped with a stirrer, a reflux condenser and a thermometer was charged with 300 parts by weight of polystyrene-polyisoprene-polystyrene block copolymer (a trade name of Kaliflex TR1111 manufactured by Shell, Ltd.) and 1500 parts by weight of cyclohexane, followed by being dissolved.

Successively, 222 parts by weight of ethyl acetate solution having 30 % by weight of peracetic acid was continuously added dropwise, followed by epoxidizing while stirring at 40 °C for 3 hours.' The reactant solution was cooled to ordinary temperatures, followed by being taken out of the reaction vessel.

Successively, large amounts of methanol were added to the solution to precipitate a copolymer, and then the copolymer was filtered and washed by water, followed by being dried to obtain an epoxy-modified aromatic vinyl-conjugated diene block copolymer having an epoxy equivalent of 362.

The epoxy-modified aromatic vinyl-conjugated diene block copolymer obtained was designated as copolymer E.

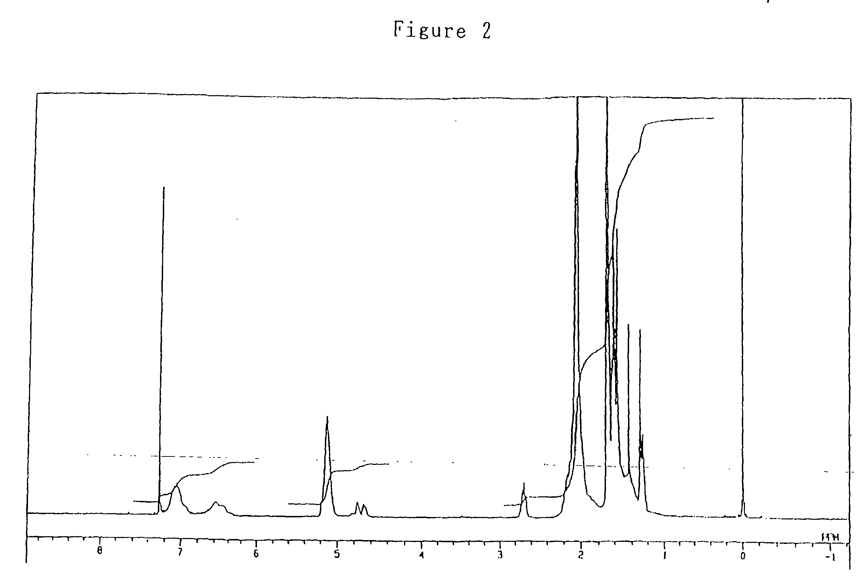

An FT-NMR absorption spectrum chart in relation to the epoxy-modified block copolymer obtained is shown in Figure 2.

It was confirmed by the Figure 1 that there decreased the peaks in 4.8-5.1 ppm and 5.2-5.6 ppm which depend upon a diene component after epoxidation, and then there were observed the peaks in 2.6-2.8 ppm and 2.8-3.0 ppm which depend upon epoxy groups derived from the epoxidation reaction.

(Synthesis Example 6/Preparation of the component (c)an epoxy-modified aromatic vinyl-conjugated diene block copolymer)

A jacketed reaction vessel equipped with a stirrer, a reflux condenser and a thermometer was charged with 300 parts by weight of polystyrene-polyisoprene-polystyrene block copolymer (a trade name of VS-1 manufactured by Kurare, Ltd., which is a copolymer having a polyisoprene block including vinyl groups) and 1500 parts by weight of cyclohexane, followed by being dissolved.

Successively, 222 parts by weight of ethyl acetate solution having 30 % of peracetic acid was continuously added dropwise, followed by epoxidizing while stirring at 40 °C for 3 hours.

The reactants solution was cooled to ordinary temperatures, followed by being taken out of the reaction vessel.

Successively, large amounts of methanol were added to the mixture to precipitate a copolymer, and then the copolymer was filtered and washed by water, followed by being dried to obtain an epoxy-modified aromatic vinyl-conjugated diene block copolymer having an epoxy equivalent of 375.

Epoxy-modified aromatic vinyl-conjugated diene block copolymer obtained was designated as copolymer F.

(Synthesis Example 7/Preparation of the component (c)an epoxy-modified - aromatic vinyl-conjugated diene block copolymer which is partially hydrogenated)

A jacketed autoclave equipped with a stirrer, a reflux condenser and a thermometer was charged with 300 parts by weight of polystyrene-polyisoprene-polystyrene block copolymer (a trade name, Kaliflex TR2000 manufactured by Japan Synthetic Rubber,Ltd.) and 3000 parts by weight of cyclohexane, followed by being dissolved.

Successively, there were mixed and added 40 parts by weight of cyclohexane solution of di-p-tollylbis(1-cyclopentadienyl)titanium having the concentration of 5 millimole/liter and 8 parts by weight of n-butyllithium solution having the concentration of 5 millimole/liter at 0 °C and hydrogen pressure of 2.0 kg/cm$^2$, followed by allowing to react at hydrogen partial pressure of 2.5 kg/cm$^2$ and the temperature of 60 °C for 30 minutes.

Solvent was removed from a partially hydrogenated-copolymer solution obtained at a reduced pressure. The hydrogenation ratio in the total block of butadiene was-30 %.

There was dissolved 300 parts by weight of the partially hydrogenated copolymer in 1500 parts by weight of cyclohexane.

Successively, 300 parts by weight of ethyl acetate solution having 30 % of peracetic acid was continuously added dropwise, followed by epoxidizing while stirring at 40 °C for 3 hours.

The reactant solution was cooled to ordinary temperatures, followed by being taken out of the autoclave.

Successively, large amounts of methanol were added to the solution to precipitate a copolymer, and then the copolymer was filtered and washed by water, followed by being dried to obtain an epoxy-modified aromatic vinyl-conjugated diene block copolymer having an epoxy equivalent of 275.

Epoxy-modified aromatic vinyl-conjugated diene block copolymer obtained was designated as copolymer G.

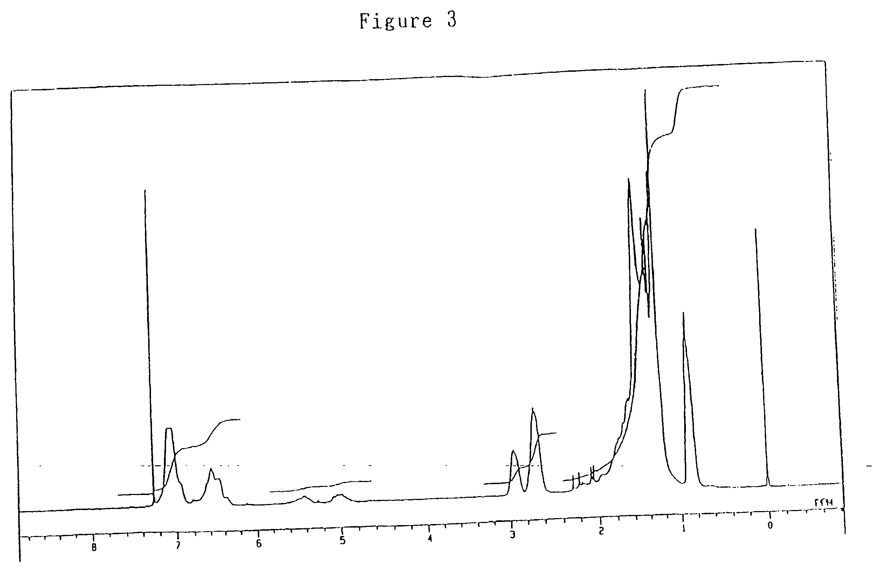

An FT-NMR absorption spectrum chart in relation to the epoxy-modified block copolymer obtained is shown in Figure 3.

It was confirmed by the Figure 1 that there decreased the peaks in 4.8-5.1 ppm and 5.2-5.6 ppm which depend upon a diene component after epoxidation, and then there were observed the peaks,in 2.6-2.8 ppm and 2.8-3.0 ppm which depend upon epoxy groups derived from the epoxidation reaction.

(Synthesis Example 8/Preparation of the component (c)an epoxy-modified aromatic vinyl-conjugated diene block copolymer)

A jacketed reaction vessel equipped with a stirrer, a reflux condenser and a thermometer was charged with 300 parts by weight of polystyrene-butadiene block copolymer [a trade name of Toughtek H-1041 manufactured by Asahi Chemical, Ltd.] and 1500 parts by weight of cyclohexane, followed by being dissolved.

Successively, 39 parts by weight of ethyl acetate solution having 30 % of peracetic acid was continuously added dropwise, followed by epoxidizing while stirring at 50 °C for 3 hours.

The reactant solution was cooled to ordinary temperatures, followed by being taken out of the reaction vessel.

Successively, large amounts of methanol were added to the solution to precipitate a copolymer, and then the copolymer was filtered and washed by water, followed by being dried to obtain an epoxy-modified aromatic vinyl-conjugated diene block copolymer having an epoxy equivalent of 5340.

Epoxy-modified copolymer obtained was designated as copolymer H.

Test pieces were prepared from thus-obtained epoxy-modified aromatic vinyl-conjugated diene block copolymers A to H.

It is noted that epoxy equivalent values were measured by titration method using brominated hydrogen acid, and calculated by the following equation.

Epoxy equivalent=10000 x [weight(g) of an epoxy-modified aromatic vinyl-conjugated diene block copolymer]/[titration amount(milliliter) of 0.1 N brominated hydrogen acid x factor of brominated hydrogen acid]

It is noted that Yellow Index values were measured with white plates coated by a layer having the thickness of 50 microns prepared from toluene solutions containing 30 % of copolymers by drying at 80 °C for 3 minutes.

A color difference meter [SZ-Sigma90 manufactured by Nihon Denshoku Industries, Ltd.] was used for measuring Yellow Index values.

Yellow Index values were measured in drying conditions by air heated at 170 °C for 20 minutes.

Melt viscosity values were measured at 190 °C with a flow tester (CFT 500 manufactured by Shimadzu Seisakusho, Ltd.).

The copolymers A to H were processed for preparing sheets with a thermal roll, respectively, then square-cut sheets having 10 cm x 10 cm were prepared by compression molding, followed by being cut with a dumb-bell cutter to obtain test pieces.

Table 1 lists mechanical properties related to the epoxy-modified copolymers A to H obtained in Synthesis Examples 1 to 8.

Table 1

| Synthesis Example | 1 | 2 | 3 | 4 | 5 | 6 | 7 | 8 |
|---|---|---|---|---|---|---|---|---|
| Epoxy-modified aromatic vinyl-conjugated diene block copolymer | | | | | | | | |
| | A | B | C | D | E | F | G | H |
| Tensile strength (Kg/cm$^2$) | 220 | - | 305 | 310 | 200 | 140 | 230 | 180 |
| Elongation at break (%) | 990 | - | 600 | 800 | 1100 | 700 | 950 | 997 |
| Hardness (JIS A) | 85 | - | 99 | 80 | 60 | 66 | 87 | 60 |
| Epoxy equivalent | 470 | 1820 | 695 | 448 | 362 | 375 | 275 | 5340 |
| Yellow Index | 1.6 | - | 0.5 | 1.7 | 1.8 | - | - | - |
| | (11.7) | - | (5.6) | (12.0) | (1.8) | - | - | - |
| Melt viscosity (poise) | 4800 | - | 7000 | - | - | - | - | - |
| | (19200) | - | (10900) | - | - | - | - | - |
| Oil resistance | 16 | - | - | 23 | 7 | - | - | - |
| | (104) | - | - | (226) | (67) | - | - | - |

Oil resistance values were measured according to JIS K6301, which show the weight increase ratio (%) after dipping in a test oil(No.1) at 70 °C for 22 hours.

Of Yellow index, melt viscosity and oil resistance values, those in parenthesis are for corresponding copolymers before epoxidation.

It is clearly shown in Table 1 that the epoxy-modified aromatic vinyl-conjugated diene block copolymer employed in the present invention has a more excellent Yellow index, flow property and oil resistance property than before epoxidation.

(Application Examples 48 and 51/Preparation of the polyalkylene terephthalate composition of the present invention and evaluation of its properties] and [Comparative Application Examples 39 to 44]

Polybutylene terephthalate resin (a trade name of Duranex 400FP manufactured by Polyplastics, Ltd., referred to as PBT), carboxylic acids and epoxy-modified aromatic vinyl-conjugated diene block copolymers were mixed by dry blending in the mixing ratio as shown in Table 5 to obtain polybutyleneterephthalate composition of the present invention.

The polybutylene terephthalate compositions obtained were melted and extruded with a screw extruder adjusted to 250 °C. to obtain pellets.

Successively, pellets obtained were molded with an injection machine adjusted to 250 °C in which a molding die temperature was adjusted to 80 °C to obtain No. 1 dumb-bell test pieces and pieces for Izod impact test based on ASTM D256.

Broken test pieces after tests were crushed with a cutter mill to repeatedly obtain pellets. Successively, pellets obtained were again molded with an injection machine under the same conditions.

Tensile strength/extension tests (based on ASTM D638) and Izod impact strength tests (based on ASTM D256) were carried out related to the once-molded test pieces, twice-molded test pieces and thrice-molded test pieces.

For reference, a mixture of PBT with a carboxylic acid alone and a mixture of PBT with the epoxy-modified aromatic vinyl-conjugated diene block copolymer alone were also prepared and molded to obtain test pieces.

Epoxy-modified aromatic vinyl-conjugated diene block copolymer, mixing amounts thereof and/or carboxylic acid and results obtained are shown in Tables 5 and 6.

Table 5

|  | [1] | [2] | [3] | [4] | [5] |
|---|---|---|---|---|---|
| Appl. Ex. 48 | H(10) | benzoic acid(0.1) | 540 | 538 | 535 |
| Appl. Ex. 49 | G(10) | benzoic acid(0.1) | 530 | 530 | 527 |
| Appl. Ex. 50 | G(10) | p-toluic acid(0.1) | 525 | 523 | 520 |
| Appl. Ex. 51 | G(10) | sebacic acid(0.05) | 525 | 522 | 519 |
| C. Appl. Ex. 39 | - | - | 560 | 550 | 521 |
| C. Appl. Ex. 40 | H(10) | - | 540 | 500 | 490 |
| C. Appl. Ex. 41 | - | benzoic acid(0.1) | 565 | 540 | 520 |
| C. Appl. Ex. 42 | - | p-toluic acid(0.1) | 565 | 543 | 513 |
| C. Appl. Ex. 43 | - | sebacic acid(0.05) | 565 | 542 | 510 |
| C. Appl. Ex. 44 | X(10) | - | 505 | 490 | 480 |

Table 6

|  | [1] | [2] | [3] | [4] | (5) | [6] |
|---|---|---|---|---|---|---|
| Appl. Ex. 48 | 50 | 47 | 45 | 7.6 | 7.4 | 7.2 |
| Appl. Ex. 49 | 55 | 53 | 52 | 9.9 | 9.7 | 9.5 |
| Appl. Ex. 50 | 60 | 59 | 57 | 10 | 10 | 9.8 |
| Appl. Ex. 51 | 58 | 56 | 54 | 10 | 9.9 | 9.7 |
| C. Appl. Ex. 39 | 32 | 30 | 25 | 2.8 | 2.5 | 2.0 |
| C. Appl. Ex. 40 | 45 | 40 | 30 | 5.9 | 4.8 | 4.1 |
| C. Appl. Ex. 41 | 30 | 21 | 13 | 2.7 | 2.5 | 2.0 |
| C. Appl. Ex. 42 | 29 | 15 | 12 | 2.7 | 2.4 | 1.9 |
| C. Appl. Ex. 43 | 29 | 14 | 9 | 2.6 | 2.4 | 1.9 |
| C. Appl. Ex. 44 | 40 | 35 | 27 | 5.7 | 4.5 | 4.0 |

In Table 5, [1], [2], [3], [4] and [5] show epoxy-modified aromatic vinyl-conjugated diene block copolymers employed and mixing parts by weight thereof, carboxylic acid and mixing parts by weight thereof, tensile strength value in once-molded test pieces, tensile strength value in twice-molded test pieces and tensile strength value in thrice-molded pieces, respectively.

In Table 6, (1), (2), (3), (4), (5) and (6) show tensile elongation value in once-molded test pieces, tensile strength value in twice-molded test pieces, Izod impact test value in once-molded test pieces and tensile strength value in twice-molded test pieces, respectively.

In Tables 5 and 6, Appl. Ex. and C. Appl. Ex. show Application Examples and Comparative Application Examples, respectively.

In Comparative Application Example 44 of Table 5, X in [1] is an ethylene-glycidyl methacrylate copolymer having a trade name of Bond First 2C manufactured by Sumitomo Chemical, Ltd.

Tables 5 and 6 clearly show that the polyalkylene terephthalate composition of the present invention has a remarkable resistance to a heat degradation in mechanical properties even after repeatedly molding and improved impact strength.

## EP 0 877 057 B1

**Claims**

1. A polyalkylene terephthalate resin composition which comprises :

   - 100 parts of a polyalkylene terephthalate resin (a),
   - 0.001 to 10 parts of a carboxylic acid (b) and
   - 1 to 100 parts of an epoxy-modified aromatic vinyl-conjugated diene block copolymer (c) in which a polymer block (i) consisting of an aromatic vinyl compound and a polymer block (ii) consisting of a compound having a conjugated double bond are included,

   wherein remaining double bonds are partially or completely epoxidized.

2. A polyalkylene terephthalate resin composition according to claim 1, wherein said carboxylic acid (b) is at least one selected from the group consisting of benzoic acid, p-toluic acid and sebacic acid.

**Patentansprüche**

1. Polyalkylenterephthalatharzzusammensetzung, welche umfaßt:

   - 100 Teile eines Polyalkylenterephthalatharzes (a),
   - 0,001 bis 10 Teile einer Carboxylsäure (b) und
   - 1 bis 100 Teile eines epoxymodifizierten aromatischen vinylkonjugierten Dienblockcopolymers (c), in welchem ein Polymerblock (i), bestehend aus einer aromatischen Vinylverbindung und ein Polymerblock (ii), bestehend aus einer konjugierten Doppelbindung, umfaßt sind,

   worin verbliebene Doppelbindungen teilweise oder vollständig epoxidiert sind.

2. Polyalkylenterephthalatharzzusammensetzung nach Anspruch 1, worin die Carboxylsäure (b) wenigstens eine aus der aus Benzoesäure, p-Toluolsäure und Sebacinsäure bestehenden Gruppe gewählt ist.

**Revendications**

1. Composition de résine de téréphtalate de polyalkylène qui comprend :

   - 100 parties d'une résine de téréphtalate de polyalkylène (a),
   - 0,001 à 10 parties d'un acide carboxylique (b) et
   - 1 à 100 parties d'un copolymère epoxy modifié (c) séquencé vinyl aromatique/diène conjugué comprenant une séquence polymère (i) consistant d'un composé vinyl aromatique et une séquence polymère (ii) consistant d'un composé ayant une double liaison conjuguée,

   **caractérisée en ce que** les doubles liaisons restantes sont partiellement ou totalement époxydées

2. Composition de résine de téréphtalate de polyalkylène selon la revendication 1, **caractérisée en ce que** ledit acide carboxylique (b) en est au moins un choisi dans le groupe constitué de l'acide benzoïque, l'acide p-toluique et l'acide sébacique.

Figure 1

Figure 2

EP 0 877 057 B1

Figure 3